Europäisches Patentamt

European Patent Office

Office européen des brevets

(19)

(11) Veröffentlichungsnummer: **0 268 846 B1**

(12) # EUROPÄISCHE PATENTSCHRIFT

(45) Veröffentlichungstag der Patentschrift: **11.09.91**

(51) Int. Cl.⁵: **B65G 17/02**, B65G 15/08

(21) Anmeldenummer: **87115656.8**

(22) Anmeldetag: **26.10.87**

(54) **Bandförderer für Linienführungen mit Abbiegungen in horizontaler, vertikaler und sphärischer Richtung.**

(30) Priorität: **21.11.86 DE 3639826**

(43) Veröffentlichungstag der Anmeldung:
**01.06.88 Patentblatt 88/22**

(45) Bekanntmachung des Hinweises auf die Patenterteilung:
**11.09.91 Patentblatt 91/37**

(84) Benannte Vertragsstaaten:
**ES FR GB IT SE**

(56) Entgegenhaltungen:
**DE-A- 2 438 897**
**DE-A- 3 224 335**
**DE-B- 1 030 249**
**FR-A- 1 266 311**

**Patent Abstracts of Japan, Band 10, Nr. 231
(M-506)(2287), 12.08.86**

(73) Patentinhaber: **VSR Engineering GmbH Fördertechnik
Hingbergstrasse 319
W-4330 Mülheim/Ruhr(DE)**

(72) Erfinder: **Günter, Roland, Prof.
Sophienweg 9
W-4230 Wesel(DE)**
Erfinder: **aus dem Moore, Dieter, Dipl.-Ing.
Zur Haar 14
W-4446 Hörstel(DE)**
Erfinder: **Pötter, Jürgen, Dipl.-Ing.
Paschenau Strasse 51
W-4440 Rheine 1(DE)**

(74) Vertreter: **Schulze Horn, Stefan, Dipl.-Ing.
M.Sc.
Goldstrasse 36
W-4400 Münster(DE)**

## Beschreibung

Die Erfindung betrifft einen Bandförderer gemäß dem Oberbegriff des Patentanspruchs 1.

Ein Bandförderer der genannten Art ist aus "Patent-Abstracts of Japan, Vol. 10, Nr. 231, 12.08.1986 & JP-A-61-64610 (HISAO IMAMURA) 03.04.1986" bekannt. Dieser Bandförderer umfaßt Gurthalter, welche jeweils hakenförmig gestaltet sind und in ihrem unteren, einen Bogen von etwa 180° beschreibenden Teil eine nach oben hin offene Aufnahmemulde für den rohrförmig gemuldeten Fördergurt bilden. Weiterhin ist an jedem Gurthalter ein verschwenkbarer Sicherungsarm vorgesehen, der bei unbelastetem Gurthalter durch Federkraft eine Öffnungsstellung einnimmt und der bei Belastung durch den mit Fördergut beladenen Fördergurt in eine den Gurt oberseitig über einen Teil dessen Umfanges umgreifende Sicherungsstellung verschwenkt wird. Um bei diesem Bandförderer den Fördergurt und die Gurthalter voneinander zu trennen, müssen letztere relativ zum Fördergurt sowohl eine Absenkbewegung als auch eine seitliche Schwenkbewegung ausführen. Umgekehrt ist das Einführen des Fördergurtes in die Halter genauso kompliziert. Diese Bewegungsvorgänge sind also vergleichsweise umständlich und erfordern entsprechend aufwendige Führungseinrichtungen für Gurt und Tragsystem. Außerdem arbeiten derartige Gurthalter nur bei beladenem Fördergurt mit ausreichender Zuverlässigkeit, da bei unbeladenem Gurt dessen Gewicht allein nicht für eine sichere Verschwenkung des Sicherungsarmes in dessen Sicherungsstellung ausreichend ist.

Bei einem aus der DE-B-1 030 249 bekannten Bandförderer sind die Gurthalter als Muldenbügel ausgebildet, die an der Unterseite des eine flache Muldung aufweisenden Fördergurtes anliegen und diesen unterstützen. Eine Ausgestaltung dieses bekannten Bandförderers sieht vor, daß an dem Muldenbügel ein Querbügel schwenkbeweglich gelagert ist. Der Gurthalter ist hier in sich starr ausgebildet, da der diesem gegenüber bewegliche Querbügel keinerlei Tragfunktion für den Fördergurt übernimmt, sondern lediglich dazu dient, den Fördergurt gegen ein Abrutschen oder Abspringen von dem Muldenbügel zu sichern. Darüber hinaus ist lediglich noch vorgesehen, die Querbügel als Träger einer leichten Abdeckung heranzuziehen, die jedoch keinerlei Gutförderungsaufgaben hat. Um bei diesem Bandförderer den Fördergurt und die Gurthalter voneinander zu trennen, müssen auch hier letztere relativ zum Fördergurt sowohl eine Absenkbewegung als auch eine seitliche Schwenkbewegung ausführen, was auch hier zu einen relativ komplizierten Aufbau des Bandförderers, insbesondere im Bereich der Umkehren, führt. Zudem ist als Nachteil bei diesem Förderer anzusehen, daß mit ihm insbesondere Kurven in horizontaler Richtung, d.h. in Förderrichtung gesehen nach links oder rechts, nur mit sehr großen Radien möglich sind, weil der Fördergurt aufgrund seiner durchweg flachen Muldung nur schwer um Kurven führbar ist, die in der Ebene seiner Flächenerstreckung verlaufen. Wird der Fördergurt dennoch um Kurven gezwungen, treten innerhalb des Fördergurtes starke Zerrkräfte auf, die eine sehr stabile Fördergurtkonstruktion erfordern und die zu einem erhöhten verschleiß führen sowie starke Antriebskräfte für den Bandförderer erfordern.

Es stellt sich daher die Aufgabe, einen Bandförderer der eingangs genannten Art zu schaffen, der für Linienführungen mit Abbiegungen in horizontaler, vertikaler und sphärischer Richtung geeignet ist, der einen geringen Bewegungswiderstand aufweist und damit niedrige Energiekosten erfordert und bei dem ein handelsüblicher Fördergurt verwendbar ist. Beim Durchfahren von Kurven sollen möglichst geringe Spannungen im Fördergurt auftreten und innerhalb des Fördergutes sollen Relativbewegungen während der Förderung vermieden werden.

Die Lösung dieser Aufgabe gelingt erfindungsgemäß durch einen Bandförderer der eingangs genannten Art mit den im Kennzeichen des Patentanspruchs 1 angegebenen Merkmalen.

Vorteilhaft erfolgt bei dem neuen Bandförderer das Trennen des Fördergurtes von den Gurthaltern sowie das Aufnehmen des Fördergurtes durch die Gurthalter vergleichsweise einfach und erfordert lediglich eine Auseinanderbewegung von Gurthaltern und Fördergurt in einer einzigen, hier vertikalen Richtung. Hierdurch wird der Bandförderer insgesamt in seinem Aufbau vereinfacht und verbilligt. Zugleich sind weitestgehend beliebige Kurvenführungen ohne besondere Beanspruchung des Fördergurtes möglich. Die Bewegungswiderstände des neuen Bandförderers sind im wesentlichen auf die Rollwiderstände der umlaufenden Gurthalter reduziert; Tragrollen-Laufwiderstände und Fördergurt-Walkwiderstände treten lediglich innerhalb der Tragrollenstationen an den Übergangsbereichen auf, so daß nur eine geringe Antriebskraft für den Betrieb des Bandförderers erforderlich ist. Auch Relativbewegungen innerhalb des Fördergutes im Fördergurt treten praktisch nicht mehr auf, da Walkungen des Fördergurtes nur dort auftreten, wo in ihm kein Fördergut transportiert wird. Wegen der verminderten Bewegungswiderstände und wegen des Wegfalls der Relativbewegungen im Fördergut kann problemlos ein kostengünstiger Fördergurt in konventioneller, unmodifizierter Ausführung eingesetzt werden, der wegen seiner größeren Flexibilität auch engere Kurvenradien in beliebigen Richtungen ermöglicht.

Eine Weiterbildung der Erfindung sieht vor, daß das endlose Seil mit den daran befestigten Gurthaltern des Tragsystems und der Fördergurt synchron antreibbar sind. Hiermit kann die Antriebskraft für den Betrieb des Bandförderers parallel auf zwei Wegen eingeleitet werden, was eine gleichmäßigere Belastung der Teile des Bandförderers ergibt und für eine längere Haltbarkeit des Fördergurtes sorgt.

Weitere Ausgestaltungen des Bandförderers gemäß Erfindung sind in den Unteransprüchen 3 und 4 angegeben.

Ein Ausführungsbeispiel der Erfindung wird im folgenden anhand einer Zeichnung näher erläutert. Die Figuren der Zeichnung zeigen im einzelnen:

| | |
|---|---|
| Figur 1 | einen Bandförderer in Draufsicht, |
| Figur 2 | eine Seitenansicht des Bandförderers, |
| Figur 3 | einen Querschnitt durch den Bandförderer, |
| Figur 4 | einen Gurthalter im geöffneten Zustand, |
| Figur 5 | einen Übergangsbereich des Bandförderers in Seitenansicht und |
| Figur 6 | den Übergangsbereich aus Figur 5 in Draufsicht. |

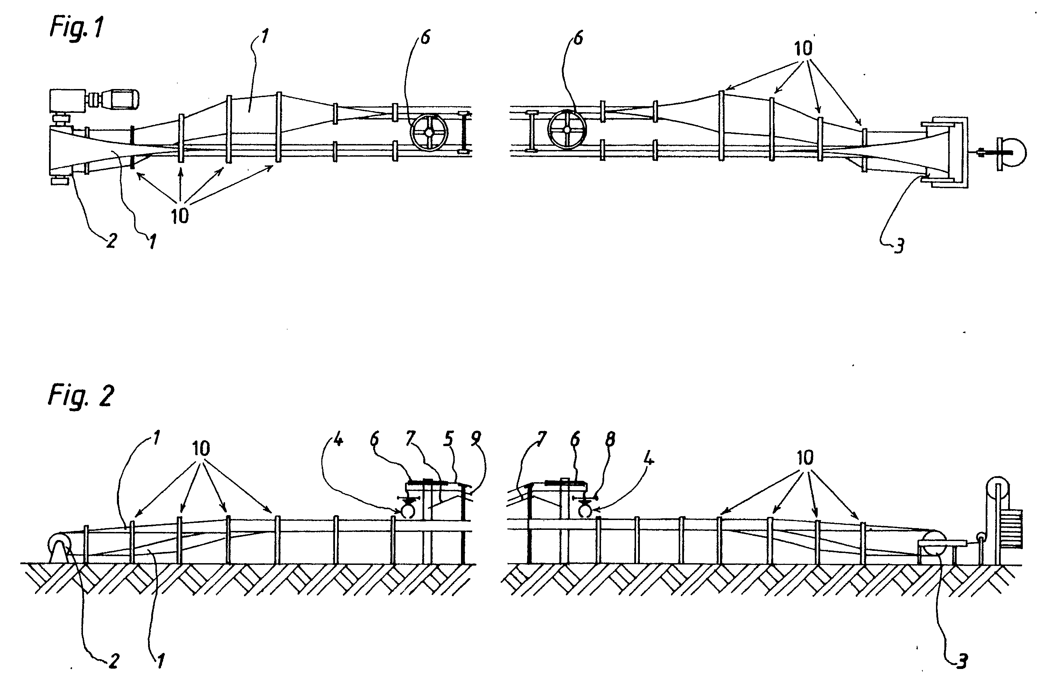

Wie aus den Figuren 1 und 2 ersichtlich ist, umfaßt der hier als Ausführungsbeispiel gezeigte Bandförderer einen Fördergurt 1, der um eine angetriebene Umkehrtrommel 2 und eine mitlaufende Umkehrtrommel 3, die gleichzeitig als Spanntrommel fungiert, geführt ist. Im Bereich der Trommeln 2, 3 weist der Fördergurt 1 eine flache Muldung auf, die in Gurtlaufrichtung unmittelbar hinter den Trommeln 2, 3 über gestaffelt angeordnete Tragrollenstationen 10 in eine rohrförmigen Muldung überführt wird. Innerhalb dieses Übergangsbereiches findet auch die Beschickung des Bandförderers mit Fördergut statt. Hinter sowie vor diesem Übergangsbereich befindet sich die Bandstraße, innerhalb derer der Fördergurt 1 in rohrförmiger Muldung von einem endlos umlaufenden Tragsystem, bestehend aus einer Vielzahl zangenartiger Gurthalter 4, getragen wird. Diese Gurthalter 4 besitzen je zwei sichelförmige Zangenarme 41, 42 und sind an einem endlosen umlaufenden Seil 5 befestigt, das über Umkehren 6 geführt ist.

Innerhalb des Bereiches, in dem der Fördergurt 1 von den zangenartigen Gurthaltern 4 des umlaufenden Tragsystems entweder übernommen oder freigegeben wird, sind Führungsschienen 7 vorgesehen, die dazu dienen, mittels eines zweiarmigen Verstellhebels 8 am Gurthalter 4 unter Ausnutzung der translatorischen Bewegungsenergie des Fördergurtes 1 die Zangenarme 41, 42 der Gurthalter 4 entweder zu schließen oder zu öffnen.

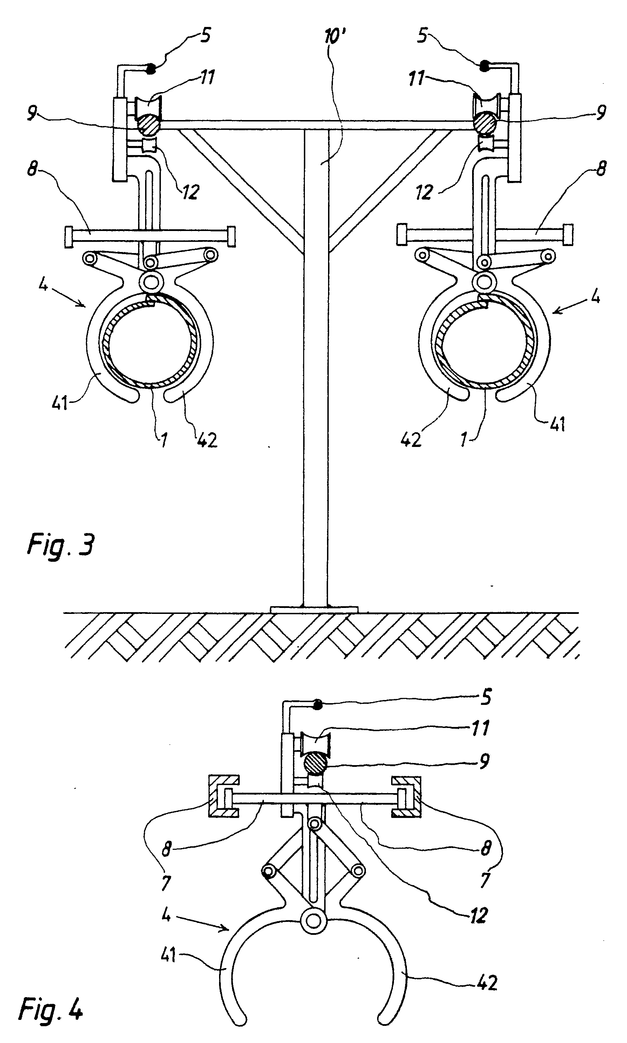

Das Trum des Fördergurtes 1, das diesen Übergangsbereich in Richtung Bandstraße verläßt, hält durch sein Eigengewicht die Gurthalter 4 in einer stabilen geschlossenen Stellung, wie aus Figur 3 ersichtlich ist. Dieser Bandstraßenbereich kann, sofern dieser mit festen Schienen 9 ausgerüstet ist, die z.B. auf Stützen 10' befestigt sind, beliebige Linienführungen aufweisen. Die Führung der Gurthalter 4 erfolgt über Stützrollen 11 und Führungsrollen 12, die jeweils der Form der Schiene 9 angepaßt sind. Dies gewährleistet eine sichere Führung und lediglich Bewegungswiderstände aus rollender Reibung. Bei gradlinigen Führungen des Bandförderers kann als Schiene 9 auch ein vorgespanntes Seil benutzt werden, wobei der Übergangsbereich zum starren Schienenabschnitt entsprechend zu gestalten ist.

Figur 4 zeigt einen Gurthalter 4 in geöffneter Position, wie er sie während der Führung um die Umkehren 6 einnimmt, wobei hier das Zusammenwirken der Führungsschienen 7 und des Verstellhebels 8 deutlich wird.

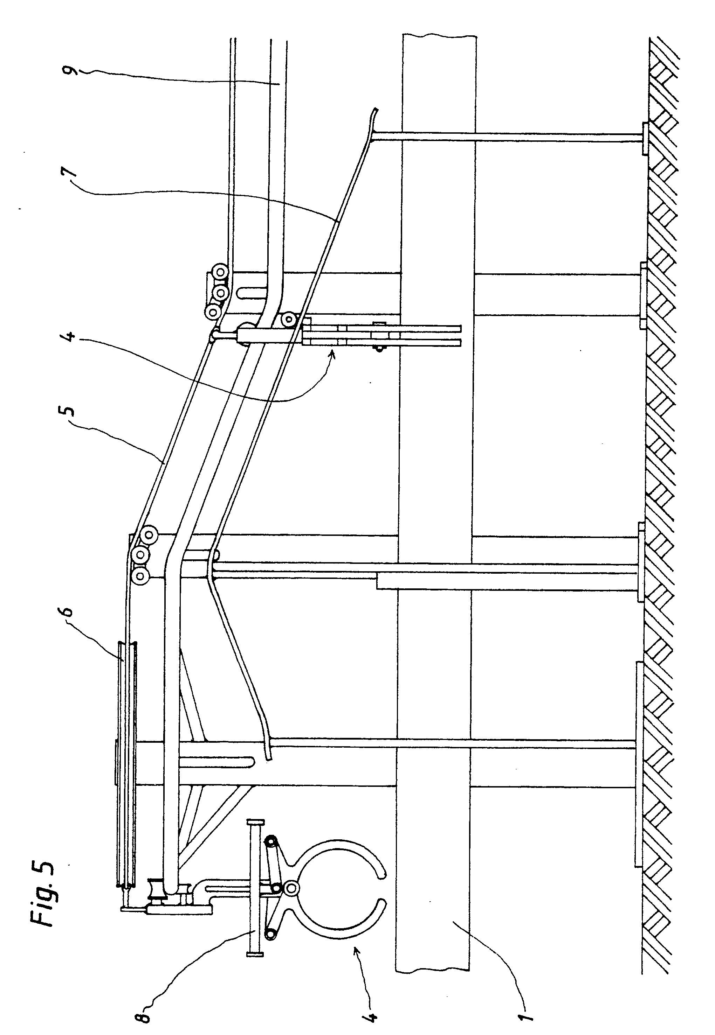

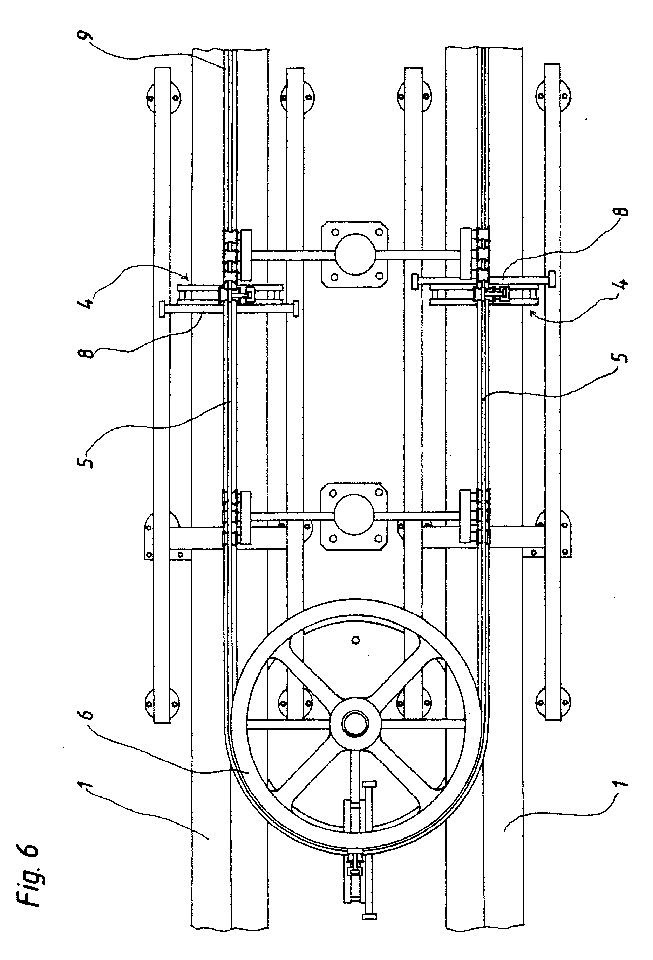

Die Figuren 5 und 6 zeigen den Bereich, in dem über die Umkehre 6 das Tragsystem mit der Vielzahl zangenartiger Gurthalter 4, die über ein Verbindungsseil 5 verbunden sind, umgelenkt werden. Es ist hier zu erkennen, daß je nach Förderrichtung die zangenartigen Gurthalter 4 entweder geöffnet werden und dabei den Fördergurt 1 freigeben, oder aber geschlossen werden und dabei den Fördergurt 1 umfassen, was als zwangsläufige Bewegung über den Verstellhebel 8 innerhalb der Führungsschienen 7 bewerkstelligt wird.

## Patentansprüche

1.   Bandförderer mit einem endlosen, flexiblen und angetriebenen Fördergurt (1), der flach um Umkehrtrommeln (2, 3) gelenkt und im übrigen Bandstraßenbereich, in dem eine endlose, auf festen Stützen (10') gelagerte Schiene (9) oder ein vorgespanntes Seil vorgesehen ist, von einem darauf umlaufenden Hänge-Tragsystem, das aus einer Vielzahl von Gurthaltern (4) besteht, die in Abständen an einem endlosen Seil (5) befestigt sind, in Muldenform getragen und geführt wird, wobei die Gurthalter (4) gegeneinander bewegliche Halterteile aufweisen, wobei das Tragsystem nach Trennung von dem Fördergurt (4) gesondert über eigene Umkehren (6) umgelenkt wird und hieran anschließend wieder den Fördergurt (1) aufnimmt und wobei jeweils in einem Übergangsbereich zwischen der Umkehrtrommel (2; 3) für den Fördergurt (1) und der benachbarten Umkehre (6) für das Tragsystem den Fördergurt (1) von der flachen in eine rohrförmige Muldung überführende Tragrollenstationen (10) angeordnet sind,
   **dadurch gekennzeichnet,**
   daß die Gurthalter (4) jeweils mit zwei im wesentlichen symmetrischen sichelförmigen Zangenarmen (41, 42) ausgebildet sind, die zangenartig in einer zur Fördererlängsrichtung senkrechten Ebene gegeneinander verschwenkbar sind, wobei die Zangenarme (41, 42) in Schließstellung annähernd einen den eine rohrförmige Muldung aufweisenden Fördergurt (1) umfassenden Ring bilden und in Öffnungsstellung, den Fördergurt (1) freigebend, nach unten hin geöffnet sind.

2. Bandförderer nach Anspruch 1, dadurch gekennzeichnet, daß das endlose Seil (5) mit den daran befestigten Gurthaltern (4) des Tragsystems und der Fördergurt (1) synchron antreibbar sind.

3. Bandförderer nach wenigstens einem der Ansprüche 1 und 2, dadurch gekennzeichnet, daß die Zangenarme (41, 42) in Öffnungsrichtung und in Schließrichtung unter Ausnutzung der translatorischen Bewegungsenergie der Trume des Fördergurtes (1) über kurvenartige Führungsschienen (7) und mit diesen zusammenwirkende Verstellhebel (8) betätigbar sind.

4. Bandförderer nach wenigstens einem der Ansprüche 1 und 2, dadurch gekennzeichnet, daß die Zangenarme (41, 42) in Öffnungsrichtung und in Schließrichtung durch externe Betätigungseinrichtungen betätigbar sind.

**Claims**

1. A belt conveyor with a continuous, flexible and driven conveyor belt (1), which is guided flat around reversal drums (2,3) and in the remaining belt train region, in which a continuous rail (9), mounted on fixed supports (10'), or a prestressed cable is provided, is carried and guided by a suspension/support system revolving thereon, which consists of a plurality of belt holders (4), which are attached spaced apart from each other on an endless cable (5), in a trough shape, in which the belt holders (4) have holder parts which are movable with respect to each other, in which the support system, after separation from the conveyor belt (4) is deflected separately over its own reversals (6) and subsequently thereto receives the conveyor belt (1) again and in which in each case in a transition region between the reversal drum (2; 3) for the conveyor belt (1) and the adjacent reversal (6) for the support system, support roller stations (10) are arranged, which carry the conveyor belt (1) over from the flat trough into a tubular-shaped trough, characterized in that

the belt holders (4) in each case are constructed with two substantially symmetrical sickle-shaped pincer arms (41, 42), which are able to be swivelled with respect to each other in a pincer-like manner in a plane vertical to the longitudinal extent of the conveyor, in which the pincer arms (41,42) in the closed position form approximately a ring embracing the conveyor belt (1) having a tubular-shaped trough, and in the open position, releasing the conveyor belt (1), are opened toward the bottom.

2. A belt conveyor according to Claim 1, characterized in that the endless cable (5) with the belt holders (4), attached thereon, of the support system, and the conveyor belt (1) are able to be driven in synchronism.

3. A belt conveyor according to at least one of Claims 1 and 2, characterized in that the pincer arms (41, 42) in the opening direction and in the closing direction, utilizing the translatorial kinetic energy of the sides of the conveyor belt (1) are able to be actuated via curve-like guide rails (7) and adjusting levers (8) cooperating therewith.

4. A belt conveyor according to at least one of Claims 1 and 2, characterized in that the pincer arms (41, 42) are able to be actuated in the opening direction and in the closing direction through external actuating arrangements.

**Revendications**

1. Transporteur à bande comportant une bande de transport (1) sans fin, flexible et entraînée, qui est conduite à plat autour de tambours de changement de sens (2, 3) et qui, dans le reste de la zone de ligne de bande dans laquelle est prévu un rail (9) sans fin monté sur des appuis fixes (10') ou un câble tendu au préalable, est portée en forme d'auge et guidée par un système de support à suspension circulant sur ces éléments qui se compose de plusieurs supports (4) de bande qui sont fixés sur un câble sans fin (5) à distance l'un de l'autre, les supports de bande (4) comportant des éléments de support mobiles l'un par rapport à l'autre, le système de support, après avoir été séparé de la bande de transport (4), étant dévié de façon distincte au moyen de dispositifs propres de changement de sens et recevant ensuite à nouveau la bande transporteuse (1), et des stations à rouleaux de support, qui font passer la bande transporteuse (1) d'une forme plate à une forme tubulaire

4

d'auge, étant respectivement disposées dans une zone de passage entre le tambour de changement de sens (2; 3) de la bande transporteuse (1) et les dispositifs de changement de sens voisins (6) du système de support,

**caractérisé en ce que,**

les supports (4) de bande sont respectivement constitués de deux bras de tenaille (41, 42) sensiblement symétriques en forme de faucille qui peuvent pivoter l'un par rapport à l'autre à la façon d'une tenaille dans un plan transversal à la direction longitudinale du transporteur, les bras de tenaille (41, 42) formant, dans la position de fermeture, à peu près un anneau entourant la bande transporteuse (1) qui présente une forme tubulaire d'auge et étant ouverts vers le bas dans la position d'ouverture qui libère la bande transporteuse (1).

2. Transporteur à bande selon la revendication 1, caractérisé en ce que le câble sans fin (5), avec les supports (4) de bande du système de support qui y sont fixés et la bande transporteuse (1) peuvent être entraînés de façon synchrone.

3. Transporteur à bande selon l'une au moins des revendications 1 ou 2, caractérisé en ce que les bras de tenaille (41, 42) peuvent être actionnés en direction d'ouverture ou en direction de fermeture en utilisant l'énergie de mouvement de translation des éléments de la bande transporteuse (1) au moyen de rails de guidage incurvés (7) et de leviers (8) de manoeuvre coopérant avec ceux-ci.

4. Transporteur à bande selon l'une au moins des revendications 1 ou 2, caractérisé en ce que les bras de tenaille (41, 42) peuvent être actionnés en direction d'ouverture et en direction de fermeture par des dispositifs d'actionnement externes.

Fig.1

Fig.2

**Fig. 3**

**Fig. 4**

Fig. 5

EP 0 268 846 B1

Fig. 6

EP 0 268 846 B1